# EUROPÄISCHE PATENTSCHRIFT

(11) **EP 3 172 004 B1**
(45) Veröffentlichungstag und Bekanntmachung des Hinweises auf die Patenterteilung: **03.07.2024**
(21) Anmeldenummer: 15745395.2
(22) Anmeldetag: 16.07.2015
(51) Int. Cl.: B23F 23/12, B23F 5/16

(54) **WÄLZSTOSSMASCHINE ZUM BEARBEITEN VON WERKSTÜCKEN UND WÄLZSTOSSVERFAHREN ZUM VERZAHNUNGSBEARBEITEN VON WERKSTÜCKEN**
GEAR SHAPING MACHINE FOR MACHINING WORKPIECES AND GEAR SHAPING METHOD FOR MACHINING WORKPIECES
MACHINE DE TAILLAGE DES ENGRENAGES DE PIÈCES ET PROCÉDÉ DE TAILLAGE DES ENGRENAGES DE PIÈCES

(30) Priorität: 25.07.2014 DE 102014011145
(43) Veröffentlichungstag der Anmeldung: 31.05.2017
(73) Patentinhaber: Gleason-Pfauter Maschinenfabrik GmbH, 71636 Ludwigsburg (DE)
(72) Erfinder: PHILIPPIN, Matthias, 71277 Rutesheim (DE); KLEINBACH, Kurt, 76163 Ludwigsburg (DE); MELLINI, Arrigo, I-40033 Casalecchio di Reno (Bologna) (IT); MATTIOLI, Ugo, I-40033 Casalecchio di Reno (Bologna) (IT)
(74) Vertreter: Leinweber & Zimmermann
(86) Internationale Anmeldenummer: PCT/EP2015/001468
(87) Internationale Veröffentlichungsnummer: WO 2016/012085

(56) Entgegenhaltungen:
- GB-A- 189 913 139
- JP-U- S6 048 920
- JP-U- S6 327 220
- US-A- 1 662 109
- US-A- 2 364 065
- US-A- 3 587 384

## Beschreibung

Die Erfindung betrifft eine Maschine zum Verzahnungsbearbeiten von Werkstücken, insbesondere Wälzstoßmaschine, mit einer Spindel zur Aufnahme eines Bearbeitungswerkzeugs, einem Antrieb, mit dem die Spindel um ihre Spindelachse drehend antreibbar ist, , und einer die Einstellung der Hublage der Maschine bewirkenden Anordnung, sowie ein Verfahren zum Bearbeiten von Werkstücken.

Ein Beispiel für eine derartige Maschine in Form einer Wälzstoßmaschine ist hinsichtlich dem prinzipiellen Aufbau und den Maschinenachsen und Funktionen in den Bildern 7.2-3 und 7.2-4 auf den Seiten 290/291 des Lehrbuchs "Innovative Zahnradfertigung" von Thomas Bausch, 3. Auflage, dargestellt. So erfolgt beim Wälzstoßen die Hauptschnittbewegung durch lineare Oszillation des Werkzeugs, beispielsweise einem grad- oder schrägverzahnten Stoßrad, wobei die Bearbeitung unter Wälzkopplung von Werkzeug und Werkstück erfolgt. Das Prinzip und die grundlegende Funktionsweise von Wälzstoßmaschinen sind dem Fachmann bekannt, und die Anmeldung enthält diesbezüglich keine weiteren Ausführungen mehr, sondern verweist diesbezüglich auf die oben angegebene Literaturstelle.

Je nach Dimension einer durch das Wälzstoßen herzustellenden Werkstückverzahnung ist die Wälzstoßmaschine passend einzustellen. Relevante Einstellfunktionen dazu sind die Hublageneinstellung und die Hublängeneinstellung. So kann für eine Hublagenverstellung oder Hublängenverstellung der Arbeitsraum geöffnet und nach Lösen der Feststellschrauben eines Haltemechanismus der Hubspindel eine Hubspindelverlagerung vorgenommen werden. Dies fordert einiges an Erfahrung und Geschick des die Verstellung vornehmenden Bedienpersonals der Maschine. Zudem weist eine solche konventionelle Maschine den Nachteil auf, dass sich die Maximalwerte der Hublagen- und Hublängenverstellung wechselseitig begrenzen.

Dieses Problem der wechselseitigen Begrenzung von Hublagen- und Hublängenverstellung ist in der Technik durch Einführung eines Stoßkopfschlittens gelöst worden, d.h. durch Einführung einer zusätzlichen Linearachse in Z-Richtung, in welcher der gesamte Stoßkopf im Arbeitsraum verfahren werden kann. Bei dieser Maschine steht wegen der Unabhängigkeit von Hublagen- und Hublängeneinstellung die von der Maschine angebotene Hublänge über den gesamten Verfahrbereich zur Verfügung. Ein Beispiel einer derartigen Wälzstoßmaschine mit Stoßkopfschlitten ist im Bild 7.2-2 auf S. 289 der oben genannten Literaturstelle dargestellt.

Ein zusätzlicher Vorteil des vorgesehenen Stoßkopfschlittens ist auch darin zu sehen, dass selbst wenn die gegenwärtig bearbeitete Werkstück-Charge keine Änderung von Hublänge oder Hublage erfordert, die Hublage auch dann ohne Beeinflussung der Hublängeneinstellung angepasst werden kann, wenn sich die axiale Stoßradabmessung aufgrund eines Nachschärfvorgangs des Stoßrades geändert hat.

US 2,364,065 A offenbarte ein durch Drehung der Werkzeugspindel eingeleitetes Lösen der Aufspannung eines Stoßrads von der Spindel nach dem Arbeitshub und vor dem nachfolgenden Leerhub. US 3,587,384 A und US 1,662,109 offenbaren jeweils einen Motor, der über einen Getriebezug sowohl die reziproke Hubbewegung als auch die Spindeldrehung für die Wälzstoßbearbeitung antreibt. GB 13139 A A.D. 1899 offenbart, die reziproke Bewegung einer Stoßmaschine über eine Kombination aus Drehbewegung und axialer reziproker Bewegung zu realisieren.

JP-S-6327220 U offenbart eine Wälzstoßmaschine mit einem separaten Antrieb zur Hublageneinstellung. JP-S-6048920 U offenbart eine Wälzstoßmaschine gemäß dem Oberbegriff von Anspruch 1.

Der Erfindung liegt die Aufgabe zugrunde, eine Maschine der eingangs genannten Art dahingehend weiterzubilden, dass eine unter den Gesichtspunkten der baulichen Einfachheit einerseits und einer hohen Bearbeitungsqualität andererseits zufriedenstellende Maschine bereitgestellt wird.

Diese Aufgabe wird von der Erfindung in vorrichtungstechnischer Hinsicht gelöst durch eine Weiterbildung der Maschine mit den kennzeichnenden Merkmalen von Anspruch 1.

Mit der erfindungsgemäßen Maschine ist es daher möglich, beispielsweise nach einem zum Zwecke des Werkzeug-Nachschärfens vorgenommenen Werkzeugwechsel eine neue Hublageneinstellung durch den Spindelantrieb selbst zu bewirken. Die Hublageneinstellung erfolgt somit motorisch, insbesondere CNC-gesteuert, so dass hohe Einstellgenauigkeiten erreichbar sind. Insbesondere kommt es nicht mehr auf die Erfahrung und das manuelle Geschick des Bedienpersonals der Maschine an. Zum anderen kann auf den Stoßkopfschlitten verzichtet werden, ohne Genauigkeitseinbußen bei der Hublageneinstellung. Es wird zwar das oben erläuterte vorteilhafte Prinzip der Unabhängigkeit von Hublagen- und Hublängeneinstellung aufgegeben, allerdings eine baulich andere und abschnittsweise einfachere Maschine erreicht. So ist insbesondere vorgesehen, dass die Maschine keinen Stoßkopfschlitten aufweist.

Desweiteren ist bevorzugt vorgesehen, dass die auf erfindungsgemäße Art erreichte Relativlagenverschiebung nicht mehr als 10 cm, bevorzugt nicht mehr als 7 cm, insbesondere nicht mehr als 4 cm beträgt, durchaus auch nicht mehr als 3 cm. Auf diese Weise erhöht sich die gesamte Stabilität der Anlage, da die Spindel nicht länger als notwendig über den letzten Lagepunkt hinaus aus dem Stoßkopf herausragt.

Erfindungsgemäß weist die Anordnung ein erstes Teil auf, das bei der Betätigung drehfest mit der Spindel verbunden wird. Die Anordnung kann somit wenigstens zwei Einstellungen einnehmen, eine erste Einstellung, in der das erste Teil nicht drehfest mit der Spindel verbunden ist, und eine zweite Einstellung, bei der diese drehfeste Verbindung hergestellt ist. Bei Betätigung der Anordnung erfolgt somit ein Übergang von der ersten zur zweiten Einstellung.

In einer besonders bevorzugten Ausführungsform weist das erste Teil eine axiale Aufnahme oder Bohrung auf, in der ein beispielsweise axial verschieblicher, mit dem ersten Teil drehfest gekoppelter Bolzen geführt ist, über dessen insbesondere hydraulisch oder pneumatisch bewirkbare Verschiebung die drehfeste Verbindung des ersten Teils mit der Spindel herstellbar ist, insbesondere über einen Formschluss. Auf diese Art und Weise wird die Betätigung von der konstruktiven Seite her unter Beibehaltung einer kompakten Maschine besonders einfach erreicht.

In einer besonders bevorzugten Ausführungsform weist die Anordnung ein zweites Teil auf, dessen drehfeste Verbindung mit dem ersten Teil bei der Betätigung gelöst wird. In der ersten Einstellung der Anordnung besteht somit eine drehfeste Verbindung, während in der zweiten Einstellung eine Relativdrehung zwischen erstem und zweitem Teil möglich ist. Wenn zudem in der zweiten Einstellung eine drehfeste Verbindung zwischen dem ersten Teil und der Spindel besteht, kann durch den Spindelantrieb das erste Teil der Anordnung gegenüber dem zweiten Teil der Anordnung verdreht werden.

In einer besonders bevorzugten Ausführungsform weist das erste und/oder das zweite Teil ein Gewinde auf, und das zweite und/oder das erste Teil ein von dem Gewinde geführtes Gegenstück. Auf diese Art und Weise führt eine Drehbewegung des ersten Teils zu dessen axialer Relativbewegung gegenüber dem zweiten Teil, und somit zu einer Relativbewegung der Spindel mit Axialrichtungskomponente gegenüber einem vorgegebenen Fixpunkt auf der Spindelachse, wenn die Anordnung in der zweiten Einstellung ist.

In einer bevorzugten Ausführungsform weist das erste Teil ein Außengewinde und das zweite Teil ein dazu passendes Innengewinde auf. Dies erlaubt eine kompakte konstruktive Realisierung und schafft insbesondere Raum für den oben erläuterten axial verschieblichen Bolzen. In diesem Zusammenhang kann auch zweckmäßig vorgesehen werden, dass eine Einrichtung zum Lösen der druckfesten Verbindung zwischen dem ersten und dem zweiten Teil hydraulisch oder pneumatisch wirkt: Die die druckfeste Verbindung zwischen dem ersten und dem zweiten Teil bewirkende Einrichtung kann beispielsweise durch unter Vorspannung stehender Gewindeklammem bereitgestellt werden, beispielsweise unter Verwendung von Tellerfedern.

Es sind somit bevorzugt zwei Kopplungen vorgesehen, eine (erste) Kopplung, die gekoppelt eine drehfeste Verbindung zwischen dem ersten und dem zweiten Teil der Anordnung herstellt und entkoppelt ein gegenseitiges relatives Drehen dieser Teile gegeneinander erlaubt, und eine (zweite) Kopplung, die gekoppelt eine drehfeste Verbindung zwischen der Spindel und dem ersten Teil herstellt und entkoppelt erlaubt, dass sich das erste Teil nicht mit der Spindel dreht. In einer ersten Betriebseinstellung der Anlage, die für die Werkstückbearbeitung vorgesehen ist, und bei der die Anordnung nicht betätigt ist, ist die erste Kopplung im gekoppelten Zustand und die zweite Kopplung im entkoppelten Zustand. Bei Betätigung der Anordnung ist dagegen die erste Kopplung im entkoppelten Zustand und die zweite Kopplung im gekoppelten Zustand.

Erfindungsgemäß ist das erste wie auch das zweite Teil ein Funktionselement einer Einrichtung, über die die Spindel eine reziproke Hubbewegung ausführen kann, insbesondere einer Pleuelanordnung. Auf diese Weise wird die Anordnung kompakt in das Maschinenkonzept zur Realisierung der Hubbewegung integriert.

In verfahrenstechnischer Hinsicht wird die Aufgabe durch ein Wälzstoßverfahren mit den Merkmalen von Anspruch 11 gelöst.

Die Vorteile des erfindungsgemäßen Verfahrens ergeben sich aus den oben erläuterten Vorteilen der erfindungsgemäßen Maschine und Anordnung.

Insbesondere kann vorgesehen werden, dass die Axialpositionierung nach Aufspannung eines hinsichtlich seiner axialen Abmessung gegenüber dem zuvor aufgespannten Werkzeug geänderten Werkzeug erfolgt. Diese veränderte axiale Abmessung kann sich dadurch ergeben, dass das zuvor aufgespannte Werkzeug nachgeschärft wurde, oder dadurch, dass aufgrund der erforderlichen Nachschärfoperation zwischenzeitlich ein anderes Werkzeug an die Spindel angekoppelt wird. Desweiteren wird mit der Axialpositionierung bevorzugt eine Hublageneinstellung vorgenommen.

Weitere Merkmale, Einzelheiten und Vorteile der Erfindung ergeben sich aus der nachfolgenden Beschreibung mit Bezug auf die beigefügten Figuren, von denen
- Fig. 1: Bestandteile einer erfindungsgemäßen Anordnung in einem Axialschnitt zeigt,
- Fig. 2A, 2B: erläuternde Querschnittsansichten von Bestandteilen der Anordnung sind,
- Fig. 3: eine schematische Axialschnittansicht der Ankopplung an Spindel/Kurbelgetriebe zeigt, und
- Fig. 4: schematisch einen möglichen Aufbau einer Wälzstoßmaschine zeigt.

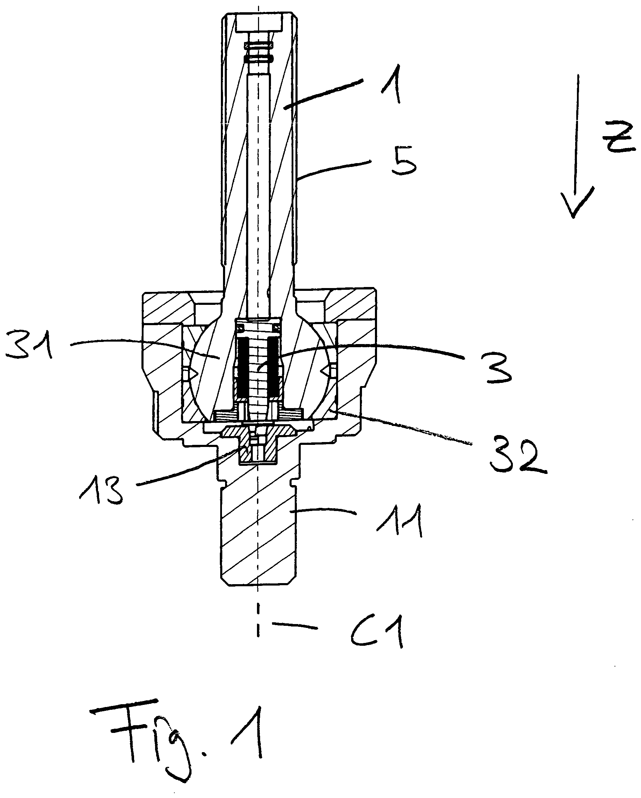

in Fig. 1 ist ein für das Verständnis der Erfindung relevanter Bereich einer erfindungsgemäßen Anordnung in einem Axialschnitt dargestellt. Gezeigt ist die Ankopplung einer der Ausführung einer reziproken Hubbewegung in Z-Richtung dienenden Pleuelanordnung an eine Spindel einer Wälzstoßmaschine. Bestandteil der Pleuelanordnung ist ein Kugelbolzen 1, der über einen Kugelkopf 31 in einer Kugelpfanne 32 gelagert ist, welche in einem drehfest an der nicht gänzlich dargestellten Werkzeugspindel fixierten Spindelendteil 11 gebildet ist. In einer der Kugelpfanne 32 zugewandten zentralen Ausnehmung des Spindelendteils 11 ist eine konische Hülse 13 drehfest eingebaut. Dreht sich der in Fig. 1 nicht dargestellte Spindelantrieb, so dreht sich somit auch das Spindelendteil 11, die Kugelpfanne 32 und die Hülse 13 um die Spindelachse C1.

Der Kugelbolzen 1 ist innen hohl ausgeführt und hat im Bereich des Kugelkopfs 31 einen Bolzen 3 verschieblich geführt. Das konische Vorderende des Bolzens 3 passt zur Konizität der Hülse 13. Zudem ist der Bolzen 3, wenn in die Hülse 13 eingeführt, in Formschluss mit der Hülse 13 drehgekoppelt, beispielsweise nach dem Prinzip von Keil und Schlitz.

In einer Bearbeitungsstellung befindet sich der Bolzen 3 in der in Fig. 1 dargestellten Lage, also von der Hülse 13 entkoppelt. In dieser Lage wird der Bolzen 3 durch eine Einrichtung vorgespannt gehalten, beispielsweise eine Federeinrichtung.

Wird allerdings von der Rückseite her durch die zentrale Öffnung im Kugelbolzen 1 mittels eines beispielsweise Hydraulikfluids ein Druck aufgebracht, wird der Bolzen 3 in die Hülse 13 gedrängt und somit eine drehfeste Verbindung zwischen dem Kugelbolzen 1 und dem Spindelendteil 11 hergestellt. Bei Drehung des Spindelantriebs dreht sich dann auch der Kugelbolzen 1.

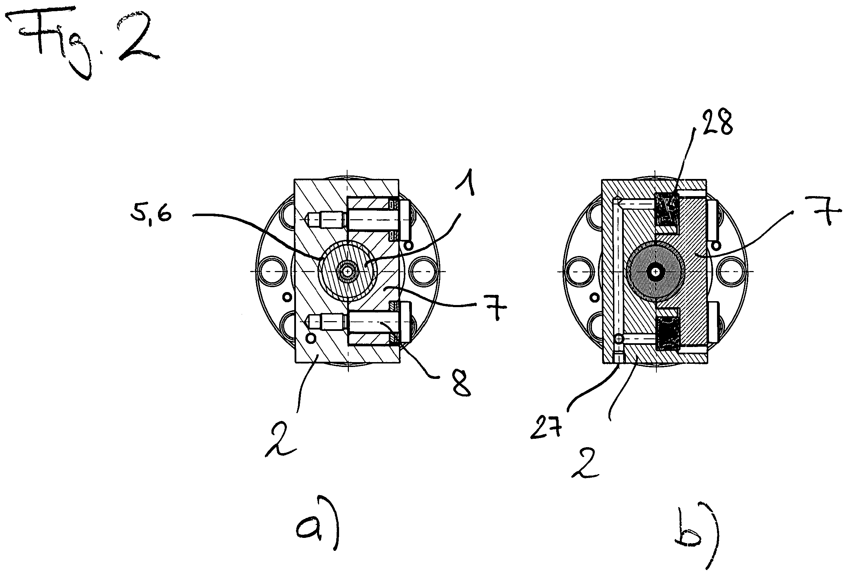

Der Kugelbolzen 1 ist weiter mit einem Außengewinde 5 versehen, mit dem er in ein dazu passendes Innengewinde 6 einer Kugelbolzenhalterung 2 eingeschraubt ist. Dies ist besser in Fig. 2A zu erkennen. In der zum Wälzstoßen vorgesehenen Bearbeitungsstellung ist der Kugelbolzen 1 jedoch in der Kugelbolzenhalterung 2 nicht verdrehbar, da das Gewinde 5, 6 über mehrere, beispielsweise drei Gewindeklemmen 7 geklemmt ist. In diesem Ausführungsbeispiel geschieht dies durch Bolzen 8 unter Wirkung von beispielsweise Tellerfedern. Bei dem Bolzen 8 handelt es sich jedoch nicht um Schraubbolzen. Vielmehr können die Gewindeklammern 7 durch hydraulische Betätigung gelöst werden, indem durch in der Kugelbolzenhalterung 2 geschaffene Fluidkanäle 27 ein Hydraulikfluid mit Druck beaufschlagt wird, der ausreichend ist, um die Gewindeklemmen 7 über Druckübertragungsteile 28 von der Kugelbolzenhalterung 2 abzuheben. Dies ist in der Schnittansicht von Fig. 2B erkennbar.

In der in den Figuren 1 und 2 gezeigten Betriebsstellung stellen die untereinander drehfesten Kugelbolzen 1 und Kugelbolzenhalterung 2 somit Bestandteil einer Pleuelanordnung dar, die über das Kugelgelenk 31, 32 mit der Werkzeugspindel zur Übertragung von Kräften in Hubrichtung, aber verdrehbar verbunden sind. In dieser Betriebsstellung ist wie auch sonst üblich ein Wälzstoßverfahren durchführbar.

Werden nun ausgehend von dieser Betriebsstellung die beiden oben erläuterten Hydrauliksysteme betrieben, wird zum einen über eine Kopplung des konischen Bolzens 3 mit der konischen Hülse 13 eine drehfeste Kopplung zwischen der Werkzeugspindel und dem Kugelbolzen erreicht, und zum anderen die Drehfestigkeit des Kugelbolzens 1 mit der Kugelbolzenhalterung 2 aufgehoben. Dies hat zur Folge, dass eine motorisch bewirkte Spindeldrehung den Kugelbolzen 1 mitdreht und aufgrund der Gewinde 5, 6 dafür sorgt, dass der Kugelbolzen 1 aus der Kugelbolzenhalterung 2 beispielsweise herausgeschraubt wird. In dieser Einstellung kann die Hublage der Werkzeugspindel eingestellt werden.

In einem erfindungsgemäßen Verfahren findet beispielsweise eine Wälzstoßbearbeitung mit einem Stoßrad statt, das nach einer gewissen Arbeitszeit nachzuschärfen ist. Das neue an die Werkzeugspindel gekoppelte Werkzeug (oder das vorherige nach dem Nachschärfen) weist gegenüber dem zuvor verwendeten eine beispielsweise um ΔZ geringere axiale Abmessung auf, so dass die Hublage nunmehr um ΔZ falsch eingestellt ist, sobald das neue Stoßrad angekoppelt ist.

Die Wälzstoßmaschine dieser Ausführungsform besitzt keinen Stoßkopfschlitten, mit dem ein solcher Hublagenfehler ΔZ leicht zu korrigieren wäre. Stattdessen werden nun die Hydrauliksysteme betätigt, also von dem Wälzstoß-Betriebszustand in den Hublagenverstellzustand gewechselt. Aufgrund der bekannten Gewindedaten des Gewindes 5, 6 kann die Steuerung der CNC-gesteuerten Wälzstoßmaschine die zur Hublagenkompensation ΔZ erforderliche Drehung des Kugelbolzens 1 in der Kugelbolzenhalterung 2 bestimmen und den CNC-gesteuerten Spindelantrieb der mit dem Kugelbolzen 1 in dieser Betriebsstellung gekoppelten Werkzeugspindel entsprechend ansteuern, sich um den der Hublagenkorrektur ΔZ entsprechenden Drehwinkel zu drehen.

Bei diesem Ausführungsbeispiel ist aus Stabilitätsgründen eine auf diese Art und Weise erreichbare maximale Hublagenänderung auf ca. 20 mm eingeschränkt. Dies erlaubt ein mehrfaches Nachschärfen von Stoßrädern und deren hublagenpassende Verwendung in der Wälzstoßmaschine. Die Hublageneinstellung wie oben erläutert, erfolgt CNC-gesteuert, also nach Eingabe eines Betätigungssignals automatisch, und ist somit unter sehr hoher Präzision, obwohl die Wälzstoßmaschine über keinen motorisch betätigbaren Stoßkopfschlitten verfügt.

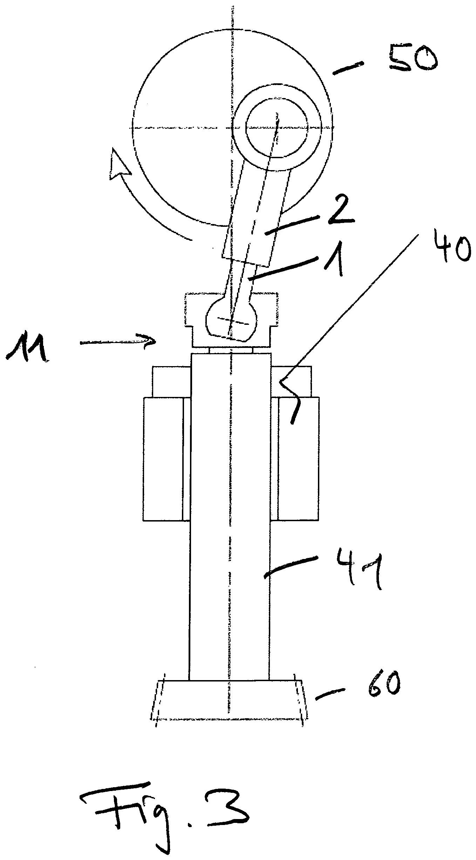

In Fig. 3 ist noch der Zusammenhang der erfindungsgemäßen Anordnung an ein Kurbelgetriebe (50) mittels Pleuelanordnung 1, 2 dargestellt, sowie an die von Spindelantrieb 40 angetriebene, das Stoßrad 60 tragende Spindel 41, deren Endteil 11 mit Kugelbolzen 1 gekoppelt ist, in einer typischen Momentaufnahme während der Arbeitsstellung. Man erkennt, dass dagegen in der Betriebsstellung für die Hublageneinstellung die Achse des Kugelbolzens 1 mit der Spindelachse übereinstimmt.

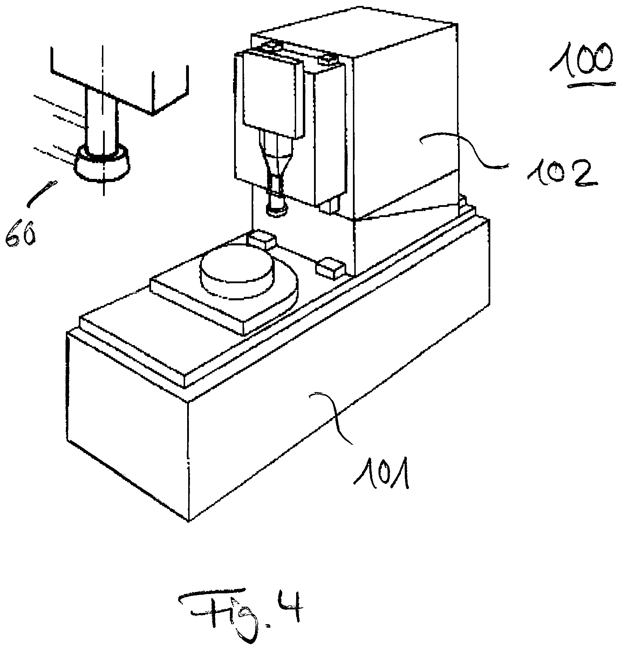

Fig. 4 zeigt noch einen typischen Aufbau einer Wälzstoßmaschine 100, mit einem den Stoßkopf tragenden Turm 102 auf einem Maschinenbett 101, auf welcher die Anordnung einsetzbar ist, wenngleich erfindungsgemäß ein Stoßkopfschlitten nicht erforderlich ist.

Die Erfindung ist nicht auf die in den Zeichnungen gezeigten Merkmale eingeschränkt.

## Patentansprüche

1. Wälzstoßmaschine zum Verzahnungsbearbeiten von Werkstücken, mit
einer Spindel (11, 41) zur Aufnahme eines Bearbeitungswerkzeugs (60), einer Einrichtung, über die die Spindel eine reziproke Hubbewegung ausführen kann,
einem Antrieb (40), mit dem die Spindel um ihre Spindelachse (C1) drehend antreibbar ist, und einer die Einstellung der Hublage der Maschine bewirkenden Anordnung, wobei
bei Betätigung der Hublageneinstellungsanordnung die bezüglich der Spindelachse axiale Relativlage der Spindel durch eine von dem Antrieb hervorgerufene Spindeldrehung geändert wird und die Hublageneinstellungsanordnung ein erstes Teil (1) aufweist, das bei der Betätigung drehfest mit der Spindel verbunden wird,
**dadurch gekennzeichnet, dass** das erste Teil (1) eine axiale Ausnehmung aufweist, in der ein axial verschiebliches, mit dem ersten Teil drehfest gekoppeltes Koppelteil (3) geführt ist, über dessen Verschiebung die drehfeste Verbindung des ersten Teils mit der Spindel herstellbar ist, wobei die Hublageneinstellungsanordnung ein zweites Teil (2) aufweist, dessen drehfeste Verbindung mit dem ersten Teil bei der Betätigung gelöst wird, und wobei das erste und das zweite Teil Funktionselemente der Einrichtung, über die die Spindel eine reziproke Hubbewegung ausführen kann, sind.

2. Wälzstoßmaschine nach Anspruch 1, bei der das Koppelteil in Form eines Bolzens (3) gebildet ist.

3. Wälzstoßmaschine nach Anspruch 1 oder 2, bei der die drehfeste Verbindung über einen Formschluss herstellbar ist.

4. Wälzstoßmaschine nach einem der Ansprüche 1 bis 3, bei der die Verschiebung hydraulisch oder pneumatisch bewirkbar ist.

5. Wälzstoßmaschine nach einem der vorhergehenden Ansprüche, bei der das erste und/oder das zweite Teil ein Gewinde (5, 6) aufweist und das zweite und/oder das erste Teil ein von dem Gewinde geführtes Gegenstück aufweist.

6. Wälzstoßmaschine nach Anspruch 5, bei der das erste Teil (1) ein Außengewinde (5) und das zweite Teil (2) ein dazu passendes Innengewinde (6) aufweist.

7. Wälzstoßmaschine nach einem der vorhergehenden Ansprüche, bei der eine Einrichtung zum Lösen der druckfesten Verbindung zwischen dem ersten und dem zweiten Teil hydraulisch oder pneumatisch wirkt, und insbesondere dabei von der Einrichtung eine oder mehrere unter Vorspannung stehende Gewindeklammern (7) gelöst werden.

8. Wälzstoßmaschine nach einem der vorhergehenden Ansprüche, bei der die Einrichtung, über die die Spindel eine reziproke Hubbewegung ausführen kann, eine Pleuelanordnung ist.

9. Wälzstoßmaschine nach einem der Ansprüche 2 bis 8, bei der das erste Teil ein innen hohl ausgeführter Kugelbolzen (1) einer Pleuelanordnung der Wälzstoßmaschine ist, und die axiale Verschieblichkeit des Bolzens (3) im Bereich des Kugelkopfs (31) des Kugelbolzens (1) realisiert ist.

10. Wälzstoßmaschine nach den Ansprüchen 3 und 9, bei dem der Formschluss durch ein zur Konizität einer drehfest in einer zentralen Ausnehmung eines Spindelendteils (11) der Spindel eingebauten konischen Hülse (13) passendes konisches Vorderende des Bolzens (13) realisiert ist, wobei die zentrale Ausnehmung einer drehfest an dem Spindelteil fixierten Kugelpfanne (32) zugewandt ist, in welcher der Kugelkopf (31) gelagert ist.

11. Wälzstoßverfahren zum Verzahnungsbearbeiten von Werkstücken mittels einer Wälzstoßmaschine nach einem der Ansprüche 1 bis 10, bei dem bei einer Vornahme einer Hublageneinstellung für die Bearbeitung eine Axialpositionierung einer motorisch um eine Spindelachse drehend antreibbaren Spindel bezüglich der Spindelachse durch den motorischen Spindelantrieb erfolgt und die Vornahme der Hublageneinstellung **dadurch gekennzeichnet ist, dass** eine drehfeste Verbindung der Spindel und einer Hublageneinstellungsanordnung durch eine Axialverschiebung eines in einer axialen Ausnehmung eines Teils der Hublageneinstellungsanordnung axial verschieblich und mit ihr drehfest geführten Koppelteils hergestellt wird.

12. Verfahren nach Anspruch 11, bei dem die Axialpositionierung nach Aufspannung eines hinsichtlich seiner axialen Abmessung gegenüber dem zuvor aufgespannten Werkzeug geänderten Werkzeug erfolgt.

## Claims

1. A gear shaping machine for machining the teeth of workpieces, comprising:
a spindle (11, 41) for receiving a machining tool (60),
a device, by means of which the spindle can perform a reciprocating stroke motion,
a drive (40), by means of which the spindle can be driven so as to rotate around its spindle axis (C1), and
an arrangement for effecting the adjustment of the stroke position of the machine,
wherein upon actuation of said stroke position adjustment arrangement the axial relative position of the spindle with respect to the spindle axis is changed by means of a spindle rotation caused by the drive and the stroke position adjustment arrangement comprises a first part (1) which, upon said actuation, is connected to the spindle for conjoint rotation,
**characterised in that** the first part (1) comprises an axial cut-out in which an axially movable coupling part (3) is guided, which coupling part is connected to the first part for conjoint rotation and the movement of which coupling part creates the connection of the first part to the spindle for conjoint rotation, wherein the stroke position adjustment arrangement comprises a second part (2), the connection of the latter to the first part for conjoint rotation being released upon said actuation, and wherein the first and the second part are functional elements of the device by means of which the spindle can perform a reciprocating motion.

2. The gear shaping machine according to claim 1, wherein the coupling part is configured in the form of a bolt (3).

3. The gear shaping machine according to claim 1 or 2, wherein the connection for conjoint rotation can be created by means of a positive connection.

4. The gear shaping machine according to claims 1 to 3, wherein the movement can be produced hydraulically or pneumatically.

5. The gear shaping machine according to one of the preceding claims, wherein the first and/or second part comprises a thread (5, 6) and the second and/or first part comprises a counterpart that is guided by the thread.

6. The gear shaping machine according to claim 5, wherein the first part (1) comprises an external thread (5) and the second part (2) comprises a matching internal thread (6).

7. The gear shaping machine according to one of the preceding claims, wherein a device for releasing the pressure-resistant connection between the first and the second part is operated hydraulically or pneumatically, and in particular one or more pre-tensioned threaded clamps (7) are thereby released from the device.

8. The gear shaping machine according to one of the preceding claims, wherein the device by means of which the spindle can perform a reciprocating motion is a rod arrangement.

9. The gear shaping machine according to claims 2 to 8, wherein the first part is a ball head bolt (1), configured so as to be hollow inside, of a rod arrangement of the gear shaping machine, and the axial movability of the bolt (3) is created in the area of the ball head (31) of the ball head bolt (1).

10. The gear shaping machine according to claims 3 and 9, wherein the positive connection is created by a conical front end of the bolt (13) to match the tapering of a conical sleeve (13) fitted in a central cut-out of a spindle end part (11) of the spindle for conjoint rotation, wherein the central cut-out faces a ball socket (32), fixed on the spindle part for conjoint rotation, in which the ball head (31) is mounted.

11. A gear shaping method for machining the teeth of workpieces using a gear shaping machine according to claims 1 to 10, wherein a spindle, which can be driven by a motor so as to rotate about the spindle axis, is positioned axially with respect to the spindle axis by means of the motorised spindle drive at the same time as a stroke position adjustment is carried out for machining, and execution of the stroke position adjustment is **characterised in that** a connection, for conjoint rotation, of the spindle and a stroke position arrangement is created by means of an axial movement of a coupling part that is axially movable in an axial cut-out of a part of the stroke position adjustment arrangement and is guided so as to ensure conjoint rotation with the stroke position adjustment arrangement.

12. The method according to claim 11, wherein the axial positioning occurs after clamping of a tool with a different axial dimension compared to the previously clamped tool.

## Revendications

1. Machine à tailler à outil-pignon pour l'usinage de dentures de pièces, comportant :
une broche (11, 41) destinée à recevoir un outil d'usinage (60),
un dispositif permettant à la broche d'effectuer une course alternative,
un entraînement (40) permettant à la broche d'être entraînée en rotation autour de son axe de broche (C1), et
un système d'ajustement de la position de course de la machine ;
dans laquelle, sous l'effet d'un actionnement du système d'ajustement de la position de course, la position relative axiale de la broche par rapport à l'axe de broche est modifiée par une rotation de broche provoquée par l'entraînement et le système d'ajustement de la position de course comporte une première partie (1) qui est reliée à la broche de manière fixe en rotation sous l'effet de l'actionnement,
**caractérisée en ce que** la première partie (1) présente un évidement axial dans lequel est guidée une partie d'accouplement (3) déplaçable axialement et couplée à la première partie de manière fixe en rotation et par déplacement de laquelle la liaison fixe en rotation de la première partie avec la broche peut être réalisée, le système d'ajustement de la position de course comprenant une deuxième partie (2) dont la liaison fixe en rotation avec la première partie est interrompue sous l'effet de l'actionnement, lesdites première et deuxième parties consistant en des éléments fonctionnels du dispositif permettant à la broche d'effectuer un mouvement alternative.

2. Machine à tailler à outil-pignon selon la revendication 1, dans laquelle la partie d'accouplement est configurée sous la forme d'un boulon (3).

3. Machine à tailler à outil-pignon selon la revendication 1 ou 2, dans laquelle la liaison fixe en rotation peut être réalisée par conjugaison de forme.

4. Machine à tailler à outil-pignon selon l'une des revendications 1 à 3, dans laquelle le déplacement peut s'effectuer de manière hydraulique ou pneumatique.

5. Machine à tailler à outil-pignon selon l'une des revendications précédentes, dans laquelle la première et/ou la deuxième partie présentent un filetage (5, 6) et la deuxième et/ou la première partie présentent une partie conjuguée guidée par le filetage.

6. Machine à tailler à outil-pignon selon la revendication 5, dans laquelle la première partie (1) présente un filetage extérieur (5) et la deuxième partie (2) présente un filetage intérieur (6) correspondant.

7. Machine à tailler à outil-pignon selon l'une des revendications précédentes, dans laquelle un dispositif permettant d'interrompre la liaison résistant à la pression entre la première et la deuxième partie est à fonctionnement hydraulique ou pneumatique, un ou plusieurs organes de serrage filetés (7) sous précontrainte étant notamment relâchés par ledit dispositif.

8. Machine à tailler à outil-pignon selon l'une des revendications précédentes, dans laquelle le dispositif permettant à la broche d'effectuer une course alternative est un système à bielle.

9. Machine à tailler à outil-pignon selon l'une des revendications 2 à 8, dans laquelle la première partie est un boulon à tête sphérique (1) de configuration creuse d'un système à bielle de la machine à tailler à outil-pignon, et la faculté de déplacement axial du boulon (3) est assurée au niveau de la tête sphérique (31) du boulon (1).

10. Machine à tailler à outil-pignon selon les revendications 3 et 9, dans laquelle la conjugaison de forme est réalisée par une extrémité avant conique du boulon (13) qui épouse la conicité d'un manchon conique (13) installé de manière fixe en rotation dans un évidement central d'une partie terminale de broche (11), ledit évidement central étant tourné vers un coussinet sphérique (32) qui est fixé solidaire en rotation de la partie de broche et dans lequel loge la tête sphérique (31).

11. Procédé de taillage à outil-pignon pour l'usinage de dentures de pièces à l'aide d'une machine à tailler à outil-pignon selon l'une des revendications 1 à 10, dans lequel, lors de la réalisation d'un réglage de position de course en vue dudit usinage, il s'effectue, par rapport à l'axe d'une broche susceptible d'être mise en rotation, sous l'effet d'un moteur, autour dudit axe, un positionnement axial de ladite broche par rapport audit axe de broche grâce audit entraînement de broche motorisé, et la réalisation dudit réglage de position de course est **caractérisée en ce qu'**une liaison fixe en rotation de la broche et d'un dispositif de réglage de position de course est produite par déplacement axial d'une partie d'accouplement qui est déplaçable axialement dans un évidement axial d'une partie du dispositif de réglage de position de course et qui est guidée de manière fixe en rotation avec celle-ci.

12. Procédé selon la revendication 11, dans lequel le positionnement axial s'effectue après serrage d'un outil de dimension axiale différente de celle de l'outil précédemment serré.
